Europäisches Patentamt

European Patent Office

Office européen des brevets

(19)

(11) Veröffentlichungsnummer: **0 185 889**
**B1**

(12) **EUROPÄISCHE PATENTSCHRIFT**

(45) Veröffentlichungstag der Patentschrifft:
28.02.90

(51) Int. Cl.⁵: **B 23 B 31/26**, B 23 Q 5/20

(21) Anmeldenummer: 85113669.7

(22) Anmeldetag: 28.10.85

(54) **Werkzeug-Spannvorrichtung für insbesondere Fräs- und Bohrmaschinen.**

(30) Priorität: 28.12.84 DE 3447595

(43) Veröffentlichungstag der Anmeldung:
02.07.86 Patentblatt 86/27

(45) Bekanntmachung des Hinweises auf die Patenterteilung:
28.02.90 Patentblatt 90/09

(34) Bennante Vertragsstaaten:
CH FR IT LI

(56) Entgegenhaltungen:
EP-A-0 032 029
EP-A-0 104 008
DE-A-2 304 206
DE-A-2 650 758
DE-A-3 404 497
DE-B-1 427 008
US-A-4 008 518
US-A-4 019 246

(73) Patentinhaber: MAHO Aktiengesellschaft
Postfach 1280 Tiroler Strasse 85
D-8962 Pfronten (DE)

(72) Erfinder: Babel, Werner
Achweg 19
D-8962 Pfronten-Meilingen (DE)

(74) Vertreter: Patentanwälte Beetz sen. - Beetz jun. Timpe
- Siegfried - Schmitt-Fumian
Steinsdorfstrasse 10
D-8000 München 22 (DE)

LIBERGRAF, STOCKHOLM 1990

## Beschreibung

Die Erfindung betrifft eine Werkzeug-Spannvorrichtung für insbesondere Fräs- und Bohrmaschinen, bestehend aus einer zentral in der Arbeitsspindel längsverschiebbar angeordneten Spanneinrichtung mit Spannzungen, aus einem Drehstellungsgeber zum Voreinstellen der Arbeitsspindel in ihre Werkzeug-Wechselstellung und aus einer Indexiervorrichtung zur Feineinstellung und Fixierung der Arbeitsspindel in der Werkzeug-Wechselstellung.

Um bei numerisch gesteuerten Fräs- und Bohrmaschinen die Werkzeuge automatisch wechseln zu können, muß die Arbeitsspindel im Spindelstock bzw. im vertikalen Fräskopf genau in einer bestimmten Winkelstellung positioniert und fixiert werden, damit der Wechsler den Werkzeugkegel des verbrauchten Werkzeuges sicher erfassen und anschließend das neue Werkzeug mit dessen Steilkegel genau in die Spannzange einführen kann. Zu diesem Zweck erfaßt ein Drehgeber die Drehbewegung der Spindel und schaltet über die Steuerung den Antriebsmotor ab, sobald die Spindel in etwa ihre Wechselposition erreicht hat. Diese Positionierung der Spindel erfolgt in einem WinkelToleranzbereich von maximal einigen Graden, was für einen sicheren automatischen Werkzeugwechsel nicht ausreicht. Aus diesem Grunde werden zusätzliche Indexiervorrichtungen verwendet, die nach dem Stillsetzen der Spindel und nach Lösen einer im Getriebe des Antriebszuges vorgesehenen Kupplung die Spindel genau in ihre Wechselposition bringen und dort fixieren. Hierzu werden bisher besondere Einrichtungen mit eigenen Antrieben verwendet, was einen gewissen technischen Aufwand erfordert.

So ist aus der US-A-4 019 246 eine gattungsgemäße Werkzeug-Spannvorrichtung bekannt, bei welcher im Vorderende der Arbeitsspindel ein federbelastetes Führungsglied axial verschiebbar angeordnet ist. Beim Einschieben eines Werkzeugs in die Arbeitsspindel greift dieses Führungsglied in eine Ausnehmung im Werkzeugkegel. Am rückwärtigen Ende der Arbeitsspindel ist eine Platte mit einem radialen Indexieransatz befestigt, auf den zwei gegensinnig schwenkbare Backen einwirken, um die Arbeitsspindel in ihre genaue Wechselposition einzustellen. Zur Betätigung der Backen dient ein hydraulischer Stellantrieb.

Aufgabe der Erfindung ist es, eine Werkzeug-Spannvorrichtung für insbesondere Fräs- und Bohrmaschinen zu schaffen, die auf technisch einfache Weise eine selbsttätige Indexierung der Arbeitsspindel in der Werkzeug-Wechselposition ermöglicht.

Erfindungsgemäß wird diese Aufgabe dadurch gelöst, daß die Indexiervorrichtung einen an der Spanneinrichtung befestigten Querzapfen aufweist, der ein axiales Langloch in der Spindelhülse durchragt und bei einer Längsbewegung der Spannzange zwischen zwei außerhalb der Arbeitsspindel angeordneten Führungsflächen geführt ist.

Der Erfindung liegt der Gedanke zugrunde, die für jeden Werkzeugwechsel notwendige Längsbewegung der Spanneinrichtung in der Arbeitsspindel dazu auszunutzen, um die Arbeitsspindel in ihre WerkzeugWechselstellung genau einzustellen und sie in dieser zur Durchführung der Werkzeugwechsel festzulegen. Dies erfolgt durch die Führung des freien Endes des zylindrischen Querzapfens zwischen den parallel zur Spindelachse verlaufenden Führungsflächen, was beim Einlaufen des zylindrischen Querzapfens zwischen die Führungsflächen eine entsprechende Verdrehbewegung der Spanneinrichtung um ihre Längsachse zur Folge hat. Da der Querzapfen zusätzlich im Langloch der Arbeitsspindel spielfrei geführt ist, wird diese Verdrehbewegung der Spanneinrichtung auf die Arbeitsspindel übertragen, die dadurch in die genaue Werkzeugwechsel-Position eingestellt wird.

Die beiden Führungsflächen sind zweckmäßig an einem im Spindelstock verstellbar angeordneten Glied ausgebildet, welches sich normalerweise in der Bewegungsbahn des Querzapfens befindet. Das Führungsglied kann jedoch bei anormalen Betriebszuständen aus der Bewegungsbahn des Querzapfens herausbewegt werden, so daß die Arbeitsspindel in jeder beliebigen Drehstellung stillgesetzt und das Werkzeug dann von Hand gewechselt werden kann. Zweckmäßig ist das Führungsglied in Form von zwei zueinander parallelen Platten ausgebildet, die an einer von Hand verdrehbaren Welle befestigt sind. Zweckmäßig ist an einem Ende der Welle eine Handkurbel zur manuellen Verdrehung vorgesehen, die einen federbelasteten Verriegelungsbolzen als Handgriff aufweist, dem ein mit der numerischen Steuerung gekoppelter elektrischer Schalter zugeordnet ist. Durch Abziehen des Handgriffes wird die Verriegelung der Kurbel und der Welle gelöst und gleichzeitig der Schalter in seine Außerbetriebsstellung gebracht, woraufhin dann die Welle mit dem Führungsglied in ihre Außerbetriebslage verdreht werden kann.

Im folgenden wird ein Ausführungsbeispiel der Erfindung anhand der Zeichnung im einzelnen beschrieben.

Es zeigen:

Fig. 1     einen Axialschnitt durch eine Arbeitsspindel mit der erfindungsgemäßen Werkzeug-Spannvorrichtung;

Fig. 2     einen Schnitt A-B in Fig. 1.

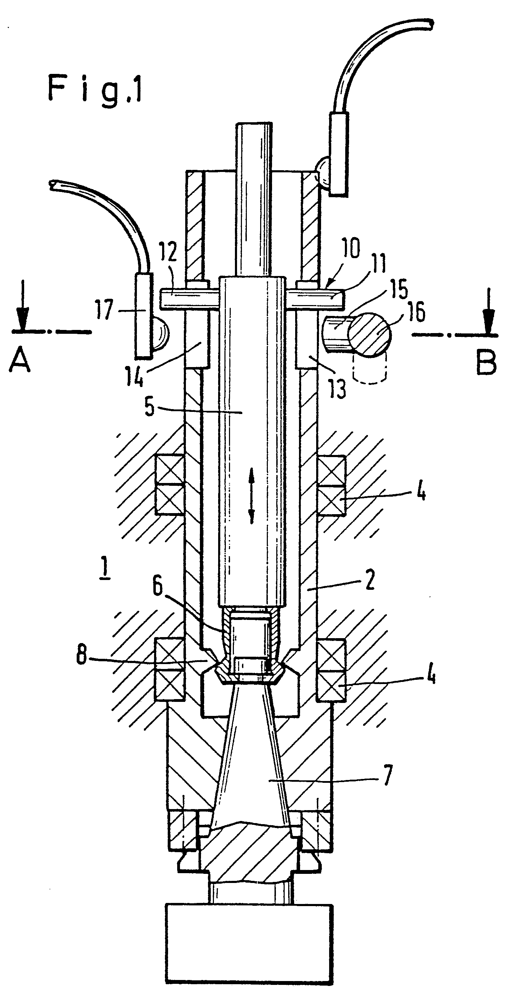

Wie dargestellt, ist in einem Spindelstock 1 eine Arbeitsspindel 2 in Lagern 4 drehbar gelagert. In der , Arbeitsspindel 2 ist eine Spanneinrichtung 5 zentral und mittels eines nicht dargestellten Antriebes längsverschiebbar angeordnet, die an ihrem in Fig. 1 unteren Ende Spannzungen 6 zum Erfassen eines WerkzeugSteilkegels 7 aufweist. In der in Fig. 1 dargestellten Greifstellung stützen sich die Spannzungen 6 an der Schrägfläche eines konischen Ansatzes 8 im Inneren der Arbeitsspindel ab. Durch eine Axialverschiebung der Spanneinrichtung 5 in Fig. 1 nach unten erfolgt eine Aufspreizung der Spannzungen 6 und damit die Freigabe des Werkzeug-Steilkegels 7.

Am oberen Ende der Spanneinrichtung 5 ist ein zylindrischer Querzapfen 10 befestigt, dessen beide vorstehenden Enden 11, 12 je ein achsparalleles Langloch 13, 14 in der Arbeitsspindel spielfrei durchragen und über den Spindelumfang vorstehen. In der in Fig. 1 dargestellten Position ist unter dem rechten Ende 11 des Querzapfens 10 ein Führungsglied 15 angeordnet, das radial vorstehend an einer im Spindelgehäuse quer zur Spindellängsachse verlaufenden Welle 16 befestigt ist. Durch eine Verdrehung der Welle um 90° kann das Führungsglied 15 aus der durchgezogen dargestellten Betriebsstellung in die gestrichelt dargestellte Außerbetriebsstellung bewegt werden.

Der das Langloch 14 durchragende linke Endteil 12 des Querzapfens 10 stellt einen Schaltstift zur Betätigung eines Endschalters 17 dar. Dieser Endschalter ist so gegenüber dem Schaltstift 12 positioniert, daß er betätigt wird, sobald die Spannzange 5 einen vorbestimmten Verschiebeweg zurückgelegt hat und dadurch der Werkzeug-Steilkegel 7 von den Spannzungen 6 freigegeben ist. Durch diese Betätigung des Endschalters 17 wird über die numerische Steuerung der Werkzeugwechsler mit seinen Greiforganen in Betrieb gesetzt, um den Werkzeug-Steilkegel 7 aus der Spindel 2 abzuziehen.

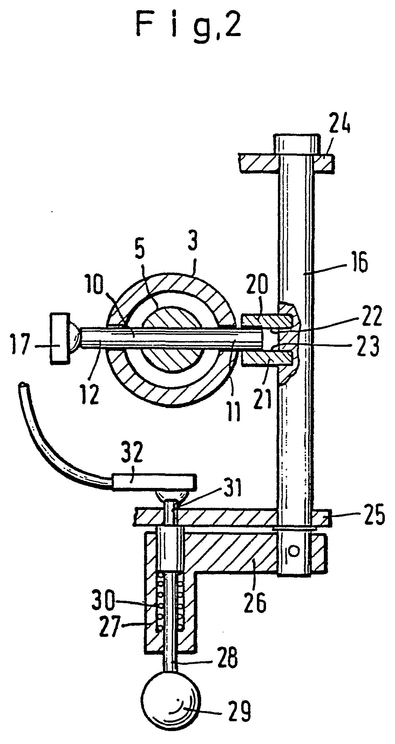

Wie in Fig. 2 dargestellt, besteht das Führungsglied 15 aus zwei zueinander parallelen Platten 20, 21 mit zueinander weisenden Führungsflächen 22, 23 für den zylindrischen Querzapfen 10. Die Welle 16 ist beidendig in Zwischenwänden 24, 25 des Spindelstocks 1 gelagert und trägt an ihrem unteren Ende eine Kurbel 26, in derem abgewinkelten Schenkel 27 der Bolzen 28 eines Handgriffs 29 gegen die Kraft einer Feder 30 längsverschiebbar gelagert ist. Der Bolzen 28 endet in einem Schaltstift 31, welcher eine Bohrung in der Wand 25 durchragt und das Schaltglied für einen elektrischen Schalter 32 darstellt. Durch Zurückziehen des Bolzens 28 mittels des Handgriffes 29 gegen die Kraft der Feder 30 wird der Schalter 32 mittels des Schaltstiftes 31 betätigt und nach Herausziehen des Schaltstiftes 31 aus der Bohrung in der Wand 35 wird die Kurbel 26 freigegeben und kann von Hand verdreht werden, wodurch das Führungsglied aus der in Fig. 1 in Vollinien dargestellten Betriebsstellung in seine gestrichelt eingezeichnete Außerbetriebsstellung verschwenkt wird. Damit wird die Wirkung der Indexiervorrichtung aufgehoben und der Werkzeug-Steilkegel kann in jeder beliebigen Drehstellung z. B. von Hand gewechselt werden.

Die Erfindung ist nicht auf das dargestellte Ausführungsbeispiel beschränkt. So können beispielsweise statt des durchgehenden Querzapfens 10 gesonderte Glieder zum Indexieren einerseits und zur Betätigung des Endschalters 17 andererseits vorgesehen werden. Ferner sind auch andere Betätigungseinrichtungen für die Spannzungen 6 möglich.

**Ansprüche**

1. Werkzeug-Spannvorrichtung für insbesondere Fräs- und Bohrmaschine, bestehend aus einer zentral in der Arbeitsspindel (2) längsverschiebbar angeordneten Spanneinrichtung (5) mit Spannzungen (6), aus einem Drehstellungsgeber zum Voreinstellen der Arbeitsspindel in ihre Werkzeug-Wechselstellung und aus einer Indexiervorrichtung für die Arbeitsspindel, *dadurch gekennzeichnet*, daß die Indexiervorrichtung einen an der Spanneinrichtung (5) befestigten Querzapfen (10) aufweist, der ein axiales Langloch (13) in der Arbeitsspindel (2) spielfrei durchragt und der bei einer Längsbewegung der Spanneinrichtung zwischen zwei außerhalb der Arbeitsspindel angeordneten Führungsflächen (22, 23) geführt ist.

2. Spannvorrichtung nach Anspruch 1 dadurch gekennzeichnet, daß die Führungsflächen (22, 23) an einem Führungsglied (15) ausgebildet sind, das im Spindelstock (1) in die Bahn des Querzapfens (11) bewegbar angeordnet ist.

3. Spannvorrichtung nach Anspruch 2, dadurch gekennzeichnet, daß das Führungsglied (15) zwei Platten (20, 21) aufweist, die an einer Welle (16) befestigt sind.

4. Spannvorrichtung nach einem der Ansprüche 1 bis 3, dadurch gekennzeichnet, daß an der Spanneinrichtung (5) ein Schaltstift (12) befestigt ist, der ein Langloch (14) in der Spindelhülse (3) durchragt und bei Werkzeugfreigabe einen mit der numerischen Steuerung gekoppelten Endschalter (17) betätigt.

5. Spannvorrichtung nach einem der Ansprüche 1 bis 4, dadurch gekennzeichnet, daß dem Führungsglied (15) eine Verriegelungsvorrichtung (28 bis 31) und ein elektrische Schalter (32) zugeordnet sind.

**Claims**

1. A toolholder assembly especially for milling and drilling machines, comprising: a toolholder (5) which is centrally disposed in the work spindle (2) so as to be longitudinally mowable and which has collet chucks (6); a rotary position detector for presetting said work spindle in its tool changing position; and indexing means for the work spindle, *characterised in* that said indexing means comprises a transverse pin (10) mounted on said toolholder (5), said transverse pin (10) extending without clearance through an axial elongated hole (13) in said work spindle (2) and being guided between two guide surfaces (22, 23) disposed outside of the work spindle when said toolholder is moved longitudinally.

2. A toolholder assembly according to claim 1, characterised in that said guide surfaces (22, 23) are formed on a guide member (15) which is disposed in the headstock (1) so as to be mowable into the path of said transverse pin (11).

3. A toolholder assembly according to claim 2, characterised in that said guide member (15) comprises two plates (20, 21) which are mounted on a shaft (16).

4. A toolholder assembly according to any one of claims 1 to 3, characterised in hat said toolholder (5) has an operating pin (12) mounted thereon which extends through an elongated hole (14) in the spindle sleeve (3) and upon tool release operates a limit switch (17) coupled to the numerical control.

5. A toolholder assembly according to any one of claim 1 to 4, characterised in that said guide member (15) has locking means (28-31) and an electrical switch (32) associated therewith.

## Revendications

1. Dispositif de serrage d'outil notamment pour fraiseuses et aléseuses, constitué par un dispositif de serrage (5) avec languettes de serrage (6), agencé centralement avec possibilité de déplacement longitudinal dans la broche de travail (2), par un capteur de position de rotation pour le positionnement préliminaire de la broche de travail à sa position de changement d'outil, et par un dispositif d'indexation pour la broche de travail, caractérisé par le fait que le dispositif d'indexation présente un doigt transversal (10) qui est fixé au dispositif de serrage (5) et qui traverse sans jeu un trou allongé axial (13) dans la broche de travail (2) et est guidé, lors d'un déplacement longitudinal du dispositif de serrage, entre deux surfaces de guidage (22, 23) agencées à l'extérieur de la broche de travail.

2. Dispositif de serrage selon revendication 1, *caractérisé* par le fait que les surfaces de guidage (22, 23) sont aménagées sur un organe de guidage (15) qui est agencé dans la poupée port-broche (1), avec possibilité d'être amené sur la trajectoire du doigt transversal (11).

3. Dispositif de serrage selon revendication 2, *caractérisé* par le fait que l'organe de guidage (15) présente deux plaques (20, 21) qui sont fixées à un arbre (16).

4. Dispositif de serrage selon l'une des revendications 1 à 3, *caractérisé* par le fait qu'un téton de commande (12) est fixé au dispositif de serrage (5) et traverse un trou allongé (14) dans le fourreau de broche (3) et, lors de la libération de l'outil, actionne un interrupteur de fin de course (17) couplé à la commande numérique.

5. Dispositif de serrage selon l'une des revendications 1 à 4, *caractérisé* par le fait qu'un dispositif de verrouillage (28 à 36) et un interrupteur électrique (32) sont conjugués à l'organe de guidage (15).

Fig.1

EP 0 185 889 B1

# F i g. 2